# EUROPEAN PATENT SPECIFICATION

(11) **EP 3 807 164 B1**
(45) Date of publication and mention of the grant of the patent: **24.08.2022**
(21) Application number: 19730149.2
(22) Date of filing: 10.06.2019
(51) Int. Cl.: B65D 51/20

(54) **CONTAINER LIDS AND METHODS OF MANUFACTURING THE SAME**
BEHÄLTERDECKEL UND VERFAHREN ZUR HERSTELLUNG DAVON
COUVERCLES DE RÉCIPIENT ET LEURS PROCÉDÉS DE FABRICATION

(30) Priority: 15.06.2018 GB 201809831
(43) Date of publication of application: 21.04.2021
(73) Proprietor: Koninklijke Douwe Egberts B.V., 3532 AD Utrecht (NL)
(72) Inventor: YORK, Geoffrey, Banbury, Oxfordshire OX16 2QU (GB)
(74) Representative: Wilson Gunn
(86) International application number: PCT/EP2019/065083
(87) International publication number: WO 2019/238612

(56) References cited:
- GB-A- 2 052 455
- US-A1- 2008 237 238

## Description

### Technical Field of the Invention

The present invention relates to container lids and methods for manufacturing container lids. The present invention further relates to a use of container lids.

### Background to the Invention

It is well known to use lids provided with laminated liners to hermetically seal containers such as tins or jars to protect food products from deterioration, such as for example coffee, cocoa, tea powder and/or spread.

Known laminated liners are commonly an assembly of several layers of different materials attached to each other and fixedly positioned inside these lids, adjacent to the lids' internal surfaces. The lower layer is usually detachably connected to the rest of the layers of these liners.

The lower layer may be glued or otherwise sealed to the perimeter of the upper rim of the neck of said containers, i.e. on their opening, in order to hermetically close and isolate from the atmosphere the food products inside.

Once this lower layer is sealed on the containers' aperture, it remains so when the lid is subsequently removed for the first time, while the remaining layers ofthe laminated liner are detached from the lower layer and retained in the container lid.

At first opening of the container, after having removed the lid (by unscrewing it for instance), the lower layer must then be removed from the neck of the container (peeled off) in order to access the containers.

The lower layer of these known liners is commonly a metal layer (also called foil) which provides a barrier to the atmosphere, particularly to oxygen in air, which is responsible for oxidation processes and affects quality of the food products inside the containers, reducing their shelf life. The remaining layers of the liner usually consist of cardboard, adhesives layers, plastic layers and/or a combination of these different materials.

These laminated liners are usually secured into the lid by applying a force to the liners in order to push them in place. This assembly step may lead to several quality issues which include damage to the liner, which undergoes stress when inserted into the lid, leading to delamination or loss of barrier properties due to scratches, cracks or faults that may occur, such as through excessive bending of the liner itself, during insertion into the lid, or when the lid is attached to the containers. These faults lead to sealing issues affecting the quality of the final food products.

GB 2 052 455 A discloses a container lid 18 that has a panel 22 of sheet material secured to its rim 20. The panel 22 has a bottom polyethylene layer 34 that is laminated to an upper portion containing an aluminium layer 30 and a printed cardboard sheet 26. In use, the panel 22 closes the mouth of the container 10 and the polyethylene layer 34 is sealed to the container rim 14. When the lid is removed, the layer 34 separates from the upper portion of the panel 22 which can then be removed from the container rim.

US 2008/237238 A1 describes a closure 22 containing a shell 28 with a base wall 36, a peripheral skirt 30 and an annular portion 38 connecting the skirt 30 to the base wall 36. A sealing liner 44 is disposed on an inner surface of the annular portion 38. The annular portion 38 has an inverted V-shape with an outer leg 42 connected to the skirt 30 and an inner leg 40 connected to the base wall 36 such that the base wall 36 is disposed axially beneath the annular connection between the inner 40 and outer legs 42. The inner leg 40 is resiliently flexible with respect to the outer leg 42 upon engagement with an end of a container neck finish 24 to flex the inner leg 40 and the base wall 36 outwardly with respect to the skirt 30 and thereby draw the outer leg 42 into engagement with an outer surface of the container neck finish 24.

The known solutions usually show rigidity of the lid structure, preventing the lid structure from absorbing stresses or strains between the container neck and the lid during attachment to the container, and increasing material costs. Such rigidity of the lid can cause problems when attaching the lid to a container, such that any stresses or strains applied to the lid can cause detachment of the liner from the closure panel (or one or more layers thereof), which may make the lid unusable or jeopardise the hermetic sealing of the lid and container.

Furthermore, the known solutions include additional expensive manufacturing processes, and result in increased cost for quality inspections of the lids after the phase of inserting the liners in the lids.

In addition, known liners and laminated liners need to be separated from the lid before recycling the lid, as the known liners comprise materials not compatible with recycling of the plastic lids.

It would be therefore advantageous to provide a solution which would improve the quality of the final product, ensuring protection of the liner when positioned inside the lid, and therefore ensuring a long-lasting shelf-life of the food ingredients and high levels of hygiene.

It would be further advantageous to provide a solution which confers flexibility to the lids to absorb stresses and strains within the lid, and/or between the container neck and the lid during manufacture (especially connection of the lid to the container) and use, and to mitigate delamination of the laminated liners prematurely.

It would be further advantageous to provide a solution which would lead to a reduction of manufacturing costs by reducing the number of steps of manufacturing processes for such lids and/or the need for additional inspection.

It would be advantageous to provide a solution which would improve post -use disposal of the container lids for consumers, through not having to separate any remaining layers of a liner or laminated liner from the lid before disposal.

It would also be advantageous to provide a solution which would provide tamper evidence through the sealed closure of a container.

It would be finally advantageous to provide a solution which would improve flexibility of the lid to allow accurate angular positioning of the lid with respect to the container itself (for example for rectangular shapes).

It is therefore an aim of embodiments of the invention to mitigate or overcome at least one problem of the prior art.

### Summary of the Invention

According to a first aspect of the invention there is provided a container lid comprising: a closure panel having an inside surface and an outside surface; a container fastening portion; and a liner comprising one or more layers connected to the inside surface of the closure panel, wherein the liner or at least a lowermost layer of the liner is detachable from the closure panel, characterized in that said container lid comprises a resilient portion located between said closure panel and said fastening portion.

In some embodiments said liner or said at least one lowermost layer is releasably connected to the closure panel by way of an adhesive. The liner or said at least one lowermost layer of said liner may comprise a metal layer. The metal layer may comprise an aluminium layer, which may comprise a polymer-coated aluminium layer.

The liner or the at least lowermost layer of the liner may form a container opening sealing layer, arranged in use to seal an opening of a container to which the lid is connected.

In a preferred embodiment, the lower layer is releasably connected to the upper layer by way of an adhesive layer. The adhesive layer may comprise an adhesive material selected from a lacquer, wax, polyolefin or a combination thereof.

The lower layer may be a container opening sealing layer, arranged in use to seal an opening of a container to which the lid is connected.

Preferably, the lower layer comprises a metal layer. More preferably the metal layer may comprise an aluminium layer, which may comprise a polymer coated aluminium layer.

In some embodiments, the upper layer may comprise material selected from cartonboard, paper, a polymeric substrate, resin or a combination thereof. In a preferred embodiment, the polymeric substrate may comprise polyethylene, polypropylene, polyethylene terephthalate, and/or polylactic acid (PLA) and/or any combination thereof.

In another embodiment, the lower layer may comprise a plastic substrate which is incompatible with the plastic substrate of the upper layer.

Preferably the lower layer has the same diameter and/or dimensions as the upper layer. More preferably, the lower layer has the same shape as the upper layer.

In some embodiments, the shape of the liner may match the shape of said closure panel. Preferably the shape ofthe liner may comprise a shape selected from a disc, circle, oval, triangle, trapezium, rectangle, square, parallelogram or pentagon.

The resilient portion may comprise a spring positioned between the fastening portion and the closure panel.

In some embodiments, the resilient portion may be in the form of a resilient rim located between the closure panel and fastening portion. The resilient rim may extend around the whole closure panel or one or more sections thereof.

At least part of the resilient rim may be elastically deformable. In some embodiments, the at least partially elastically deformable resilient rim is positioned between and contiguously with the closure panel and the fastening portion and protrudes above said closure panel (or above the plane of said closure panel). It is believed this allows absorption of stresses and/or strains applied to the closure panel, fastening portion or lid per se, during manufacture and/or, attachment to the container, and/or detachment from the container.

Preferably, the rim comprises a double-walled rim comprising spaced apart first and second walls. Said spaced apart first and second walls may comprise a gap between them. At least part of the gap may protrude above the closure panel. It is believed that this configuration assists in absorbing stresses and strains within the lid, and/or between the container neck and the lid during manufacture (especially connection of the lid to the container) and use, and to mitigate delamination of the laminated liners prematurely.

The first and second walls may be connected at an upper end thereof and the walls may be movable resiliently towards and away from each other. Thus, the double-walled rim may comprise a spring, which is compressible to move the two walls together, and which will move back to its uncompressed configuration on release of a compressing force.

A portion of the rim may protrude above the periphery of the upper surface of the closure panel. In embodiments with a double-walled rim, at least a portion ofthe rim may protrude above the upper surface of the closure panel, and preferably the connected end of the first and second walls protrudes, above the upper surface of the closure panel.

More preferably, the rim is integrally formed with the fastening portion and the closure panel.

In other embodiments, the resilient portion may consist of a resilient material. More preferably said resilient material may comprise an elastomeric material and/or rubber.

In a preferred embodiment, the elastomeric material or rubber is positioned between two non-elastomeric portions, for example between a non-elastomeric fastening portion and closure panel.

In some embodiments, the resilient portion between the closure panel and the fastening portion is the sole resilient portion, resilient means or resilient device ofthe lid.

In some embodiments, the fastening portion may comprise fastening means.

Preferably the fastening portion comprises a bayonetted connection, a threaded connection (such as a screw thread), a snap on connection or a resilient clamp.

The fastening portion may comprise a wall or skirt extending around at least part of, and preferably the whole of the periphery of the closure panel.

In other embodiments, the lid comprises a material selected from a polymeric substrate, resin or a combination thereof. The polymeric substrate may comprise a plastics material, and may be selected from polyethylene, polypropylene, polyethylene terephthalate, and/or polylactic acid (PLA) and/or any combination thereof.

In preferred embodiments, the liner, lowermost layer of the line or lower layer of the laminated liner may be configured such that, in use, it is arranged to seal a container opening before and/or after detaching from the closure panel or upper layer.

Furthermore, the liner, lowermost layer or lower layer may be glued or heat-sealed to the opening of a container, in use.

According to a third aspect of the invention there is provide a method of manufacturing a container lid of the first or second aspects of the invention, the method comprising the steps of:
(a) introducing a closure panel having a liner connected to the inside surface thereof into a mould cavity; and
(b) moulding a fastening portion around the closure panel such that the closure panel is integrated with the fastening portion.

The resilient portion of the lid may comprise part of the closure panel and step (b) may comprise moulding a fastening portion to the resilient portion.

The resilient portion of the lid may be formed during moulding of the fastening portion and may be integrally formed with the fastening portion and the closure panel during moulding.

The moulding technique may be injection-moulding.

According to a fourth aspect of the invention there is provided a method for manufacturing a container lid of the second aspect of the invention, comprising the steps of introducing a laminated liner into a mould cavity against or adjacent to a mould part corresponding to the closure panel; and moulding the container lid such that the upper layer of the laminated liner is at least partially moulded into the inside surface of the closure panel.

According to a fifth aspect of the invention there is provided use of a container lid of the invention on a food and beverage ingredient container.

According to a sixth aspect of the invention there is provided an ingredient container suitable for food and beverage ingredients, including a container lid of the invention.

### Detailed Description of the Invention

In order that the invention may be more clearly understood, embodiments thereof will now be described, by way of example only, with reference to the accompanying drawings of which:
Figure 1 illustrates a side cross-sectional view of a first embodiment of the container lid of the invention attached to a container according to the invention;
Figure 2 illustrates a side cross-sectional view of a laminated liner for use in a container lid according to the invention;
Figure 3 illustrates a side cross-sectional view of an alternative embodiment ofthe container lid of the first aspect of invention attached to a container according to the invention; and
Figure 4 illustrates a detail of a side view of a resilient portion of a third embodiment of a container lid, according to the invention.

Referring to the Figures like numbers represent like components.

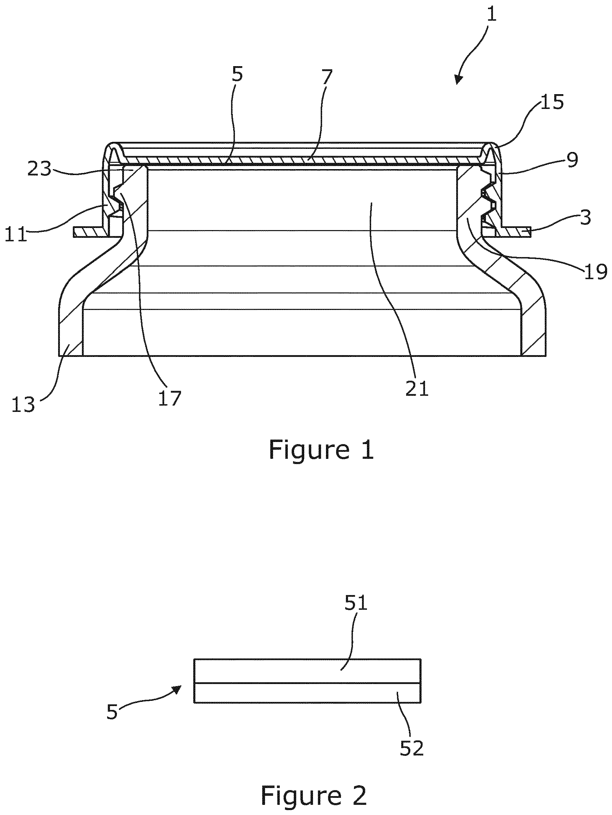

Referring firstly to Figure 1 an embodiment of an ingredient container comprising an assembly (1) of a container lid (3) provided with a laminated liner (5) and secured to an ingredient container (13), is shown.

In this embodiment, the container lid (3) is provided with a closure panel (7) and a fastening portion (9), pendent from the closure panel (7) and connected to it by means of a resilient portion in the form of a double-walled rim (15). The container lid (3) is secured to an ingredient container neck (19) of the container (13) through a threaded connection (11) positioned on the fastening portion (9) of the container lid (3). A reciprocal threaded connection (17), positioned on the ingredient container neck (19), allows a secured connection between the container lid (3) and the container (13). The laminated liner (5) is located between the closure panel (7) and an ingredient container neck rim (23), adjacent to the closure panel (7). The laminated liner (5) entirely closes the opening ofthe container (13), which is in the form of a container aperture (21), ensuring hygiene and shelf life of food ingredients inside the container (13).

In the embodiment of Figure 1 the container lid (3) is secured to the ingredient container neck (19) by a standard closure as for example a screw closure for sealing an ingredient container such as for instance a jar. Particularly, the container lid (3) is screwed on the ingredient container neck (19) through threaded connections (17, 11) in the form of reciprocal spiral protrusions positioned respectively on the ingredient container neck (19) and on the container lid fastening portion (9).

In other embodiments, alternative solutions (not shown) can be taken into consideration to secure the container lid (3) to the container neck (19). For instance, the container lid (3) can be clipped on, snapped on or alternatively clamped on the container neck (19).

According to the embodiment of Figure 1, when the container lid is engaged/secured to the ingredient container neck (19), the laminated liner (5) is positioned into the gap or space left between the closure panel (7) of the container lid (3) and the ingredient container neck rim (23).

The laminated liner (5) and the closure panel (7) are aligned with each other so that the external perimeters (not shown) and shapes of the laminated liner (5) and the closure panel (7) match each other.

As shown in Figure 1, the container lid (3) has a resilient portion positioned between the closure panel (7) and the fastening portion (9). The resilient portion is in the form of a resilient double-walled rim (15), having two spaced apart walls, one wall contiguous with the closure panel (7) and the other contiguous with the fastening portion (9), and which join at an apex therebetween. The double-walled rim (15) acts as a spring in which the two walls can flex together when then rim (15), closure panel (7) or fastening portion (9) are compressed or pressure is applied. The double-walled rim (15) then returns to its original, open position on cessation of pressure or compression. The double-walled rim (15) therefore ensures flexibility of the container lid structure and allows the absorption of flexure or flexing of the container lid (3) between the fastening portion (9) of the container lid (3) and the ingredient container neck (19) when the container lid (3) is secured to the ingredient container neck (9), thus preventing unwanted detachment of the laminated liner (5) as a whole, which may otherwise be detached if the closure panel (7) is flexed.

Alternatively, the resilient portion may include a different spring configuration to the double-walled rim (15), (not shown) positioned between the closure panel (7) and the fastening portion (9) of the container lid (3), in order to absorb stresses and/or strains applied to the closure panel (7), fastening portion (9) or lid (3) per se, during manufacture and/or, attachment to the container (13) and/or detachment from the container (13). Alternative springs may include a helical spring or a concertina material, for example.

Further, resilient properties can be conferred to the container lid structure by reducing the thickness of the container lid (3) itself (not shown).

In the embodiment of Figure 1, the container (13) is in the form of a jar which may be made of glass or plastic material or any alternative suitable material. The container (13) is suitable for containing, storing and preserving food ingredients in the form of powders such as coffee, tea, cocoa etc. and/or spreads, for example.

Referring to Figure 2, the laminated liner (5) shown in Figure 1 is shown in more detail. The laminated liner (5) is provided by the combination of a lower layer (52) and an upper layer (51) in such a way that the lower surface of the upper layer (51) detachably adheres to the upper surface of the lower layer (52). Both layers (51, 52) are aligned with each other so that the lower surface of the upper layer (51) is configured on the upper surface of the lower layer (52) and the external perimeters (not shown) and shapes of the two layers (51, 52) match each other.

The two layers (51, 52) in this embodiment are maintained adjacent by the conformation, shape and/or structure of the abutting surfaces which comprise gripping means which may for example be textured and/or embossed areas of one or both layers (51,52), ensuring a stable engagement of the two layers (51,52) one to the other.

In an alternative arrangement of the first embodiment (not shown), the two layers (51, 52) may be kept adjacent and aligned through an adhesive material (not shown) which may be applied to the abutting surfaces of one or both the adjacent layers (51, 52).

In a further arrangement, as an alternative solution, the layers' (51, 52) surfaces to be releasably connected may be made of and/or incorporate an adhesive or tacky material which makes the two surfaces releasably adhere to each other, keeping them connected until further forces are applied to them.

Further, in other arrangements, to ensure that the two layers stay in contact, a wax type material may be used as an alternative to or in combination with the adhesive material.

In the arrangement of the first embodiment, the connection between the lower layer (52) and the upper layer (51) is a releasable connection, i.e. the two layers (51, 52) can be separated from each other through an action performed by the user which breaks this connection.

In a preferred arrangement, the lower and upper layers (51, 52) have identical shapes and these may include a disc, circle, oval, triangle, trapezium, rectangle, square, parallelogram, or pentagon shape.

The lower layer (52) of Figure 2 may be in the form of an aluminium foil, while the upper layer (51) may be in the form of a plastic material, such as for instance polyethylene (PE), polyethylene terephthalate (PET), polypropylene (PP), and/or polylactic acid (PLA), ethylene vinyl alcohol (EVOH) or a combination thereof. For manufacturing the upper layer (51) any combination of the abovementioned materials can be taken into consideration.

The two-layer laminated liner (5) is moulded within the container lid (3) through an in-mould labelling process. The upper layer (51) of the two-layer laminated liner (5) is an integral part of the closure panel (7), leaving the lower layer (52) releasably attached to the closure panel (7) via one of the releasable connections described above with regards to Figure 1 or 2. The closure panel (7) and the lower layer (52) of the two-layer laminated liner (5) can therefore be separated from each other through an action performed by the user which breaks this connection.

The lower layer (52) of the two-layer laminated liner (5) within the container lid (3) is then sealed to the ingredient container neck rim (23) by a wet glue process (not shown), i.e. applying wet glue to the rim (23) and sealing/pressing the lid (3) including the lower layer (52) onto the glued rim (23). In this way, the underside of the lower layer (52) of the two-layer laminated liner (5) adheres to the rim (23) to secure the laminated liner (52) across the neck (23). This ensures hygiene and shelf life ofthe ingredient inside the container (13). Thus, at least the lower layer (52) of the laminated liner (5) can also be considered a seal or cover for the rim (23) or opening of an ingredient container (13).

As the container lid (3) is unscrewed, the join between the closure panel (7) and lower layer (52) is ruptured and the lower layer (52) remains sealed on the ingredient container neck rim (23) of the ingredient container (3).

In an alternative arrangement, the lower layer (52) of the two-layer laminated liner (5) is provided with a thin plastic layer (not shown) on the lower layer surface (not shown) abutting the ingredient container neck rim (23). The laminated liner (5) is then sealed to the ingredient container neck rim (23) by a heat-sealing process (not shown), i.e. applying heat to the container lid (3) and sealing the lid (3) including the lower layer (52) onto the container neck rim (23). The thin plastic layer (not shown) on the lower surface of the lower layer (52) may comprise polyethylene (PE), polyethylene terephthalate (PET), polypropylene (PP), and/or polylactic acid (PLA), ethylene vinyl alcohol (EVOH) or a combination thereof. This alternative arrangement is suitable for containers made of plastic substrates for instance polyethylene (PE), polyethylene terephthalate (PET), polypropylene (PP), and/or polylactic acid (PLA), ethylene vinyl alcohol (EVOH) or a combination thereof which are compatible with the plastic substrate of the thin plastic layer on the lower layer (52) of the two-layer laminated liner (5).

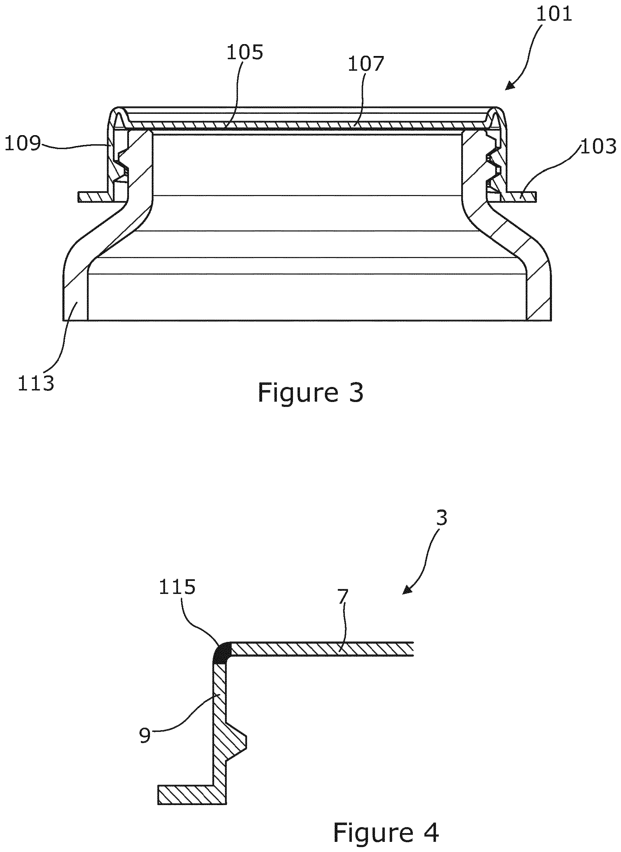

We refer now to Figure 3, which shows an alternative embodiment of an ingredient container comprising an assembly (101) of a container lid (103) (comprising a closure panel (107) and fastening portion (109)) provided with a laminated liner (105) and secured to an ingredient container (113), is shown. The assembly (101) and the container lid (103) is similar to the assembly (1) and container lid (3) of the embodiment shown in Figure 1 save that the liner (105) is a single layer, rather than a laminated liner with multiple layers.

In the embodiment of Figure 3 the liner (105) is in the form of a single layer liner. Particularly the single layer liner (105) is made of a single metal foil (for example aluminium foil) releasably attached to the closure panel (107), for example by means of an adhesive as described in Figure 2.

The single layer liner (105) of Figure 3 is a pre-assembled liner, connected to the closure panel (107) through a state of the art laminating process (not shown). This pre-formed assembly, composed of the single layer liner (105) releasably attached to the closure panel (107), is then mounted or formed on the lid (103) by moulding the fastening portion (109) of the lid (103) around the pre-formed assembly. The resulting lid (103) includes therefore the closure panel (107) moulded within the fastening portion (109) and the single layer liner (105) detachably connected to the closure panel (107). The resilient portion of the lid (103) is integrally moulded between the closure panel (107) and the fastening portion (109) during moulding of the fastening portion (109), or alternatively may be an integral part of the initial closure panel (107) and pendent therefrom.

Figure 4, show the detail of a cross-sectional side view of the resilient portion of a third embodiment of a container lid (3) of the invention. The lid (3) of Figure 4 is similar to the lid (3) of Figure 1 save that an alternative resilient portion (115) is present. The resilient portion (115) is in the form of a resilient rim made of a resilient material or substrate, such as, for instance, an elastomeric polymeric material, or rubber. The resilient portion (115) comprises a single-walled elastomeric rim (115) positioned between two non-elastomeric portions, namely the fastening portion (9) and the closure panel (7) both made of for instance polyethylene (PE), polyethylene terephthalate (PET), polypropylene (PP), and/or polylactic acid (PLA), ethylene vinyl alcohol (EVOH) or a combination thereof.

The single-walled elastomeric rim (115) is integrally formed with the fastening portion (9) and the panel closure (7).

### Manufacture of the liners, lids and containers of the invention

### Example 1

An embodiment of a method of production of a laminated liner (5) described for Figures 1-3 is described hereafter. The method includes 7 stages, as follows:
Stage 1 - the upper and lower layer of the liner are laminated together;
Stage 2 - the laminated layers are rolled into a reel and sent to a drive roller station;
Stage 3 - at the drive roller station the laminated liner (5) is flattened and centred in order to be ready for a pre-cutting;
Stage 4 - the liner (5) is pre-cut into discs (or other relevant shapes) then is sent to a moulding station;
Stage 5 - at the moulding station:
   a) a pre-cut liner disc (or other relevant shape) is immediately inserted into a moulding cavity against a mould part corresponding to the closure panel (7) of the lid (3);
   b) the mould is then prepared and plastics material is mixed, melted and sent to the mould cavity through a standard injection moulding system;
   c) an in-mould labelling process is carried out to produce the container lids (3), such that said upper layer of said laminated liner (5) is at least partially moulded into said inside surface of said closure panel (7);
   d) the container lids (3) are then sent to the control station.
      Stages b) and c) are performed simultaneously.
Stage 6 -at the controlling station each lid (3) is checked by a control means (which may be visual, for example a camera, but any suitable control means may be used) to detect the presence of the liner in the lids (3). The lids (3) which pass the control are then sent to the packaging station;
Stage 7 -the lids (3) are applied to containers (13) filled with food or beverage ingredients in order to be sealed. The rim of the opening of the container(s) is provided with an adhesive, which permanently seals the lower most layer (52) of the liner (5) to the rim, as the lids (3) are attached to the container (13).

An alternative Stage 7 may be as follows:
Stage 7 - those lids (3) are applied to containers (13) filled with food or beverage ingredients in order to be sealed. A heat-sealing process is applied to the external surface of the lids (3), permanently sealing the lower most layer (52) of the liner (5) to the rim (25) of the container (13).

The above embodiments are described by way of example only. Many variations are possible without departing from the scope ofthe invention as defined in the appended claims.

## Claims

1. A container lid (3, 103) comprising:
a closure panel (7, 107) comprising an inside surface and an outside surface;
a container fastening portion (9, 109);
and a liner (5, 105) comprising one or more layers, connected to the inside surface of the closure panel (7, 107), wherein the liner (5, 105) or
at least a lowermost layer of the liner (5, 105) is detachable from the closure panel (7, 107) **characterized in that** said container lid (3, 103) comprises a resilient portion (15, 115) located between said closure panel (7, 107) and said fastening portion (9, 109).

2. A container lid (3, 103) according to claim 1 wherein said liner (5, 105) or said lowermost layer is releasably connected to the closure panel (7, 107) by way of an adhesive.

3. A container lid (3, 103) according to claim 1 or 2 wherein said liner (5, 105) or lowermost layer of said liner (5, 105) comprises a metal layer.

4. A container lid (3, 103) according to claim 3, wherein said metal layer comprises an aluminium layer, optionally a polymer coated aluminium layer.

5. A container lid (3, 103) according to any preceding claim wherein said resilient portion (15, 115) is in the form of a resilient rim (15, 115) located between the closure panel (7, 107) and fastening portion (9, 109), said rim (15, 115) preferably comprising a double-walled rim (15, 115) comprising spaced apart first and second walls.

6. A container lid (3, 103) according to claim 5 wherein a portion of said rim (15, 115) protrudes above the periphery of the upper surface of the closure panel (7, 107).

7. A container lid (3, 103) according to claim 5 or 6 wherein said rim (15, 115) is integrally formed with said fastening portion (9, 109) and said panel closure (7, 107).

8. A container lid (3, 103) according to any preceding claim wherein said fastening portion (9, 109) comprises fastening means, said fastening means preferably comprising a bayonetted connection, a snap-fit connection, a threaded connection (11) or a resilient clamp.

9. A container lid (3, 103) as claimed in any preceding claim, wherein the liner (5, 105) comprises a laminated liner (5, 105) comprising at least an upper layer and at least a lower layer, said upper layer is at least partially moulded into the inside surface of said closure panel (7, 107) and said lower layer is releasably connected to said upper layer, said lower layer preferably releasably connected to said upper layer by way of an adhesive layer, optionally comprising an adhesive material selected from a lacquer, wax, polyolefin or a combination thereof.

10. A container lid (3, 103) according to claim 9 wherein said lower layer comprises a metal layer, said metal layer preferably comprising an aluminium layer, optionally comprising a polymer coated aluminium layer.

11. A container lid (3, 103) according to claim 9 or 10, wherein said upper layer comprises material selected from a polymeric substrate preferably comprising polyethylene, resin or a combination thereof.

12. A method of manufacturing a container lid (3, 103) as claimed in any preceding claim, the method comprising the steps of:
a) introducing a closure panel (7, 107) having a liner (5, 105) connected to the inside surface thereof into a mould cavity; and
b) moulding a fastening portion (9, 109) around the closure panel (7, 107) such that the closure panel (7, 107) is integrated with the fastening portion (9, 109).

13. A method for manufacturing a container lid (3, 103) as claimed in claims 9 to 11 comprising the steps of:
(a) introducing a laminated liner (5, 105) comprising an upper layer and a detachable lower layer into a mould cavity against or adjacent to a mould part corresponding to the closure panel (7, 107); and
(b) moulding said container lid (3, 103) such that said upper layer of said laminated liner (5, 105) is at least partially moulded into said inside surface of said closure panel (7, 107).

14. Use of a container lid (3, 103) as claimed in any one of claims 1 to 11 on a food and beverage ingredient container.

15. An ingredient container (13, 113) suitable for food and beverage ingredients including a container lid (3, 103) as claimed in any one of claims 1 to 11.

## Patentansprüche

1. Behälterdeckel (3, 103), umfassend:
eine Verschlussplatte (7, 107), die eine Innenoberfläche und eine Außenoberfläche umfasst;
einen Behälterbefestigungsabschnitt (9, 109);
und eine Auskleidung (5, 105), die eine oder mehrere Schichten umfasst und mit der Innenoberfläche der Verschlussplatte (7, 107) verbunden sind, wobei die Auskleidung (5, 105) oder mindestens eine unterste Schicht der Auskleidung (5, 105) von der Verschlussplatte (7, 107) abnehmbar ist, **dadurch gekennzeichnet, dass** der Behälterdeckel (3, 103) einen elastischen Abschnitt (15, 115) umfasst, der sich zwischen der Verschlussplatte (7, 107) und dem Befestigungsabschnitt (9, 109) befindet.

2. Behälterdeckel (3, 103) nach Anspruch 1, wobei die Auskleidung (5, 105) oder die unterste Schicht mittels eines Klebstoffs lösbar mit der Verschlussplatte (7, 107) verbunden ist.

3. Behälterdeckel (3, 103) nach Anspruch 1 oder 2, wobei die Auskleidung (5, 105) oder die unterste Schicht der Auskleidung (5, 105) eine Metallschicht umfasst.

4. Behälterdeckel (3, 103) nach Anspruch 3, wobei die Metallschicht eine Aluminiumschicht, optional eine polymerbeschichtete Aluminiumschicht, umfasst.

5. Behälterdeckel (3, 103) nach einem der vorstehenden Ansprüche, wobei der elastische Abschnitt (15, 115) in Form eines elastischen Randes (15, 115) vorliegt, der sich zwischen der Verschlussplatte (7, 107) und dem Befestigungsabschnitt (9, 109) befindet, wobei der Rand (15, 115) vorzugsweise einen doppelwandigen Rand (15, 115) umfasst, der voneinander entfernte erste und zweite Wände umfasst.

6. Behälterdeckel (3, 103) nach Anspruch 5, wobei ein Abschnitt des Randes (15, 115) über den Umfang der oberen Oberfläche der Verschlussplatte (7, 107) hinausragt.

7. Behälterdeckel (3, 103) nach Anspruch 5 oder 6, wobei der Rand (15, 115) integral mit dem Befestigungsabschnitt (9, 109) und dem Plattenverschluss (7, 107) ausgebildet ist.

8. Behälterdeckel (3, 103) nach einem der vorstehenden Ansprüche, wobei der Befestigungsabschnitt (9, 109) Befestigungsmittel umfasst, wobei die Befestigungsmittel vorzugsweise eine Bajonettverbindung, eine Schnappverbindung, eine Gewindeverbindung (11) oder eine elastische Klammer umfassen.

9. Behälterdeckel (3, 103) nach einem der vorstehenden Ansprüche, wobei die Auskleidung (5, 105) eine laminierte Auskleidung (5, 105) umfasst, die mindestens eine obere Schicht und mindestens eine untere Schicht umfasst, wobei die obere Schicht mindestens teilweise in die Innenoberfläche der Verschlussplatte (7, 107) eingeformt ist und die untere Schicht lösbar mit der oberen Schicht verbunden ist, wobei die untere Schicht vorzugsweise lösbar mit der oberen Schicht mittels einer Klebstoffschicht verbunden ist, die optional ein Klebstoffmaterial umfasst, das aus einem Lack, einem Wachs, einem Polyolefin oder einer Kombination davon ausgewählt ist.

10. Behälterdeckel (3, 103) nach Anspruch 9, wobei die untere Schicht eine Metallschicht umfasst, wobei die Metallschicht vorzugsweise eine Aluminiumschicht umfasst, die optional eine polymerbeschichtete Aluminiumschicht umfasst.

11. Behälterdeckel (3, 103) nach Anspruch 9 oder 10, wobei die obere Schicht Material umfasst, das aus einem polymeren Substrat ausgewählt ist, das vorzugsweise Polyethylen, Harz oder eine Kombination davon umfasst.

12. Verfahren zum Herstellen eines Behälterdeckels (3, 103) nach einem der vorstehenden Ansprüche, wobei das Verfahren die Schritte umfasst:
a) Einführen einer Verschlussplatte (7, 107), die eine mit ihrer Innenoberfläche verbundene Auskleidung (5, 105) aufweist, in einen Formhohlraum; und
b) Formen eines Befestigungsabschnitts (9, 109) um die Verschlussplatte (7, 107), sodass die Verschlussplatte (7, 107) mit dem Befestigungsabschnitt (9, 109) integriert ist.

13. Verfahren zum Herstellen eines Behälterdeckels (3, 103) nach den Ansprüchen 9 bis 11, umfassend die Schritte:
(a) Einführen einer laminierten Auskleidung (5, 105), die eine obere Schicht und eine abnehmbare untere Schicht umfasst, in einen Formhohlraum gegen oder benachbart zu einem Formteil, das der Verschlussplatte (7, 107) entspricht; und
(b) Formen des Behälterdeckels (3, 103) derart, dass die obere Schicht der laminierten Auskleidung (5, 105) mindestens teilweise in die Innenoberfläche der Verschlussplatte (7, 107) eingeformt wird.

14. Verwendung eines Behälterdeckels (3, 103) nach einem der Ansprüche 1 bis 11 auf einem Lebensmittel- und Getränkeinhaltsstoffbehälter.

15. Inhaltsstoffbehälter (13, 113), der für Lebensmittel- und Getränkeinhaltsstoffe geeignet ist, einschließlich eines Behälterdeckels (3, 103) nach einem der Ansprüche 1 bis 11.

## Revendications

1. Couvercle de contenant (3, 103) comprenant :
un panneau de fermeture (7, 107) comprenant une surface intérieure et une surface extérieure ;
une partie de fixation de contenant (9, 109) ;
et un revêtement (5, 105) comprenant une ou plusieurs couches, connecté à la surface intérieure du panneau de fermeture (7, 107), dans lequel le revêtement (5, 105) ou au moins une couche inférieure du revêtement (5, 105) est détachable du panneau de fermeture (7, 107) **caractérisé en ce que** ledit couvercle de contenant (3, 103) comprend une partie élastique (15, 115) située entre ledit panneau de fermeture (7, 107) et ladite partie de fixation (9, 109).

2. Couvercle de contenant (3, 103) selon la revendication 1 dans lequel ledit revêtement (5, 105) ou ladite couche inférieure est connecté de manière libérable au panneau de fermeture (7, 107) au moyen d'un adhésif.

3. Couvercle de contenant (3, 103) selon la revendication 1 ou 2 dans lequel ledit revêtement (5, 105) ou ladite couche inférieure dudit revêtement (5, 105) comprend une couche de métal.

4. Couvercle de contenant (3, 103) selon la revendication 3, dans lequel ladite couche de métal comprend une couche d'aluminium, facultativement une couche d'aluminium revêtue de polymère.

5. Couvercle de contenant (3, 103) selon une quelconque revendication précédente dans lequel ladite partie élastique (15, 115) est sous la forme d'un rebord élastique (15, 115) situé entre le panneau de fermeture (7, 107) et la partie de fixation (9, 109), ledit rebord (15, 115) comprenant de préférence un rebord à double paroi (15, 115) comprenant des première et deuxième parois espacées.

6. Couvercle de contenant (3, 103) selon la revendication 5 dans lequel une partie dudit rebord (15, 115) fait saillie au-dessus de la périphérie de la surface supérieure du panneau de fermeture (7, 107).

7. Couvercle de contenant (3, 103) selon la revendication 5 ou 6 dans lequel ledit rebord (15, 115) est formé d'un seul tenant avec ladite partie de fixation (9, 109) et ladite fermeture par panneau (7, 107).

8. Couvercle de contenant (3, 103) selon une quelconque revendication précédente dans lequel ladite partie de fixation (9, 109) comprend un moyen de fixation, ledit moyen de fixation comprenant de préférence une connexion à baïonnette, une connexion par encliquetage, une connexion filetée (11) ou une attache élastique.

9. Couvercle de contenant (3, 103) tel que revendiqué dans l'une quelconque revendication précédente, dans lequel le revêtement (5, 105) comprend un revêtement stratifié (5, 105) comprenant au moins une couche supérieure et au moins une couche inférieure, ladite couche supérieure est au moins partiellement moulée dans la surface intérieure dudit panneau de fermeture (7, 107) et ladite couche inférieure est connectée de manière libérable à ladite couche supérieure, ladite couche inférieure connectée de préférence de manière libérable à ladite couche supérieure au moyen d'une couche adhésive, comprenant facultativement un matériau adhésif choisi parmi une laque, une cire, une polyoléfine ou une combinaison de celles-ci.

10. Couvercle de contenant (3, 103) selon la revendication 9 dans lequel ladite couche inférieure comprend une couche de métal, ladite couche de métal comprenant de préférence une couche d'aluminium, comprenant facultativement une couche d'aluminium revêtue de polymère.

11. Couvercle de contenant (3, 103) selon la revendication 9 ou 10, dans lequel ladite couche supérieure comprend un matériau choisi parmi un substrat polymère comprenant de préférence du polyéthylène, une résine ou une combinaison de ceux-ci.

12. Procédé de fabrication d'un couvercle de contenant (3, 103) tel que revendiqué dans l'une quelconque revendication précédente, le procédé comprenant les étapes consistant à :
a) introduire un panneau de fermeture (7, 107) ayant un revêtement (5, 105) connecté à la surface intérieure de celui-ci dans une cavité de moule ; et
b) mouler une partie de fixation (9, 109) autour du panneau de fermeture (7, 107) de telle sorte que le panneau de fermeture (7, 107) est intégré à la partie de fixation (9, 109).

13. Procédé de fabrication d'un couvercle de contenant (3, 103) tel que revendiqué dans les revendications 9 à 11 comprenant les étapes consistant à :
(a) introduire un revêtement stratifié (5, 105) comprenant une couche supérieure et une couche inférieure détachable dans une cavité de moule contre ou à côté d'une partie de moule correspondant au panneau de fermeture (7, 107) ; et
(b) mouler ledit couvercle de contenant (3, 103) de telle sorte que ladite couche supérieure dudit revêtement stratifié (5, 105) est au moins partiellement moulée dans ladite surface intérieure dudit panneau de fermeture (7, 107).

14. Utilisation d'un couvercle de contenant (3, 103) tel que revendiqué dans l'une quelconque des revendications 1 à 11 sur un contenant pour ingrédients d'aliment ou de boisson.

15. Contenant pour ingrédients (13, 113) approprié pour des ingrédients d'aliment ou de boisson incluant un couvercle de contenant (3, 103) tel que revendiqué dans l'une quelconque des revendications 1 à 11.
